# EUROPEAN PATENT APPLICATION

(11) **EP 2 172 845 A1**
(43) Date of publication of application: **07.04.2010**
(21) Application number: 07767347.3
(22) Date of filing: 21.06.2007
(51) Int. Cl.: G06F 13/00

(54) **INFORMATION PROCESSING TERMINAL, SERVER, AND PRESENCE DISTRIBUTION SYSTEM**

(71) Applicant: Panasonic Corporation, Kadoma-shi Osaka 571-8501 (JP)
(72) Inventor: SAITO, Junya, Osaka-shi Osaka 540-6207 (JP); IKEDA, Naoya, Osaka-shi Osaka 540-6207 (JP)
(74) Representative: Grünecker, Kinkeldey, Stockmair & Schwanhäusser Anwaltssozietät
(86) International application number: PCT/JP2007/062521
(87) International publication number: WO 2008/155858

(57) **Abstract**

An information processing terminal which can differentiate the content to be distributed according to each member instead of distributing the same content when distributing some information to a plurality of members with a presence notification. The information processing terminal of the present invention is an information processing terminal 1a for sending presence. The terminal 1a includes a presence decision section 15 for allocating an information processing terminal of an addressee, to whom a conversion table is to be sent, to a conversion table for converting a first presence indicating the status of the information processing terminal 1a to a second presence. The terminal 1a also includes a wireless communications section 11 for transmitting the first presence and the information regarding the conversion table to which the presence decision section 15 has allocated information regarding the information processing terminal of the addressee.

## Description

### Technical Field

The present invention relates to a presence distribution system which can implement the IMPS (Instant Message and Presence Service) and includes a plurality of information processing terminals (client terminals) and a server as its components to send and receive presence via the server between the plurality of information processing terminals. The invention also relates to the information processing terminal and the server, which serve as the components of the system.

### Background Art

The IMPS (Instant Message and Presence Service) system is known as a communications tool which makes use of the Internet (e.g., see Patent Document 1).

Here, the IM (Instant Message) service refers to a system which relays and forwards in real time a message sent from the terminal of a sender via the server to an addressed terminal. On the other hand, the PS (Presence Service) is a communications service which allows a group of members to share "presence" indicating the state (status) of a user who utilizes a communications network. This allows for realizing the "communications only for now, here, and himself/herself" in keeping with the conditions of the user at the current point in time.

For example, the "presence" contains information such as the name or age of the sender; information indicating the type of the communications device (e.g., mobile or fixed) used by the user, and the online status (online or offline). The "presence" further contains information such as the status text (the information showing the current status of the user described in the free text, e.g., in a meeting or away from desk), and the user's current positional information (e.g., address, latitude, for longitude).

There are two conventional ways to distribute presence; one is to preset groups so that a common presence is sent automatically (unconditionally) to the members that belong to the group, and the other is to send presence to individual members not as a group. In the case of the former, the presence indicating the state (status) of the user at a certain point in time is uniformly sent to the members of the group to which the user has acknowledged to send presence. On the other hand, in the case of the latter, the user can control (restrict) the notified content of the presence depending on the other user(s).

Note that "the IM (Instant Message) service" and "the PS (Presence Service)" are essentially thought to be service concepts independent of each other; however, both services may be referred to collectively as "the Instant Message service" or "the Instant messaging." Alternatively, they may be called "presence service" when emphasis is placed on the sharing of presence. Although they are expressed differently, these expressions are thought to have content that are not substantially different from each other.

Here, from a viewpoint of accurate description of service content, the present description uses the term "IMPS (Instant Message and Presence Service)" which is a combination of the IM (Instant Message) service and the PS (Presence Service): However, as mentioned above, being capable of exchanging messages in real time is thought to mean that the real time exchange or sharing of presence is possible. Thus, there is no need to adhere to the name of service.

Note that the protocol or the like used for the IMPS is in conformity with the standard specification prepared by OMA (Open Mobile Alliance: a standardization-oriented industry group established by mobile communications companies and organizations).

Patent Document 1: JP-A-2003-271531

### Disclosure of the Invention

### Problems to be Solved by the Invention

As described above, the IMPS service is provided in a manner such that a group is preset and the presence indicating the user's state (status) at a certain point in time is uniformly transmitted in real time to a member of the group who the user has acknowledged the transmission of presence. The user can determine the content of the presence freely to some extent by taking into account the characteristics of the group. However, once an updated presence is registered with the server, any member is uniformly notified of the registered presence.

In this instance the content may not be required by a certain recipient, or some content of which the sender may not desire to inform a particular receiver can be notified to the receiver. For example, to notify members A and B of a "birthday," the presence of common content is notified to the members A and B. Thus, if the presence is set at the level of the member A to whom the detailed information "XXXX (year) YY (month) ZZ (day)" can be sent, the member B whom the sender does not want to know "XXXX (year)" would also be notified the "XXXX (year) YY (month) ZZ (day)." That is, there is a limitation in the technique which can control the content of presence to notify the recipient of optimal content. It is thus not possible to set the content of presence in such a flexible way that allows the content to be set in detail depending on the recipient. In this regard, the IMPS is not yet sufficient.

Furthermore, since the importance of security has been recently increased, it is necessary to avoid careless leakage of information. In this point, the service manner in which the presence of the same content is uniformly sent to multiple members is also susceptible to improvement.

On the other hand, the presence can also be sent to individuals not as a group. In this case, only the allowable content of presence can be distributed to each of the other users; however, the content of presence must be set for each of the other users each time the presence is distributed. Accordingly, the greater the number of other users, the greater the time and effort required to control the presence content for each of the other users becomes.

The present invention was developed in view of the aforementioned circumstances. It is therefore an object of the invention to implement a presence service which, in communicating certain information to a plurality of members by a notification of presence, enables not the same content to be uniformly communicated but a difference to be set for the communicated content depending on the member. Thus, the aim is to provide a more versatile presence service which provides improved convenience for the user, enabling to make greater use of potential capability.of the IMPS system.

### Means for Solving the Problems

An information processing terminal of the present invention is to send presence. The information processing terminal includes a conversion table allocation section which allocates, to a conversion table for converting a first presence indicating a status of the information processing terminal to a second presence, an information processing terminal of an addressee to whom the conversion table is to be sent. The information processing terminal also includes a transmission section which transmits the first presence and information regarding the conversion table to which information regarding the information processing terminal of the addressee is allocated by the conversion table allocation section.

An information processing terminal of the present invention is to receive presence. The information processing terminal includes a reception section which receives a first presence indicating a status of an information processing terminal of a sender and information regarding a conversion table for converting the first presence to a second presence. The information processing terminal also includes a presence conversion section which converts the first presence to the second presence based on the information regarding the conversion table; and an output section which outputs the second presence.

An information processing terminal of the present invention is to send and receive presence. The information processing terminal includes a conversion table allocation section which allocates, to a conversion table for converting a first presence indicating a status of the information processing terminal to a second presence, an information processing terminal of an addressee to whom the conversion table is to be sent: The information processing terminal also includes a transmission section which transmits the first presence and information regarding the conversion table to which the information processing terminal of the addressee is allocated by the conversion table allocation section. The information processing terminal further includes a reception section which receives the first presence and information regarding the conversion table; a presence conversion section which converts the first presence to the second presence based on the information regarding the conversion table; and an output section which outputs the second presence.

A server of the present invention is to send and receive presence to/from an information processing terminal, The server includes a reception section which, receives a first presence indicating a status of a first information processing terminal and information regarding the conversion table to which information regarding a second information processing terminal has been allocated. The server also includes a presence conversion section which converts the first presence to the second presence based on the conversion table; and a transmission section which transfers the second presence Converted by the presence conversion section to the second information processing terminal.

In communicating some information to a plurality of members by a notification of presence, this configuration allows not the same content to be uniformly communicated but a difference to be provided for the communicated content depending on the member.

Furthermore, the information processing terminal of the present invention also includes such an information processing terminal in which the conversion table has a conversion element table for converting the first presence to the second presence, the conversion element table being set for each presence type.

Furthermore, the information processing terminal of the present invention also includes such an information processing terminal in which the conversion table has a conversion element table for converting the first presence to the second presence, the conversion element table being set corresponding to time.

Furthermore, the information processing terminal of the present invention also includes such an information processing terminal in which the conversion table has a conversion element table for converting the first presence to the second presence, the conversion element table being set for each presence type. Additionally, the information processing terminal is also constructed such that the presence conversion section converts the first presence to the second presence based on the conversion element table corresponding to a third type of presence indicating a status of the information processing terminal.

Furthermore; the server of the present invention also includes such a server in which the conversion table has a conversion element table for converting the first presence to the second presence, the conversion element table being set for each presence type. The server is also constructed such that the reception section receives a third presence indicating the status of the second information processing terminal. The server is further constructed such that the presence conversion section converts the first presence to the second presence based on the conversion element table corresponding to a type of the third presence received by the reception section.

This configuration allows the information processing terminal serving as the sender of presence to notify other information processing terminal serving as a presence receiver of the presence in greater detail.

A presence distribution system of the present invention includes the information processing terminal of the present invention for sending presence; and a server. The server includes a reception section which receives the first presence and information regarding the conversion table. The server further includes a transmission section which transmits the first presence and information regarding the conversion table to the information processing terminal of the addressee allocated to the conversion table, the first presence and the information having been received by the reception section.

A presence distribution system of the present invention includes the information processing terminal of the present invention for sending presence and the server of the present invention.

A presence distribution system of the present invention includes the server of the present invention, and the information processing terminal which includes a reception section for receiving the second presence and an output section for outputting the second presence.

A presence distribution system of the present invention includes a server and the information processing terminal of the present invention for receiving presence. The server includes a reception section for receiving the first presence and information regarding the conversion table. The server also includes a transmission section for transmitting the first presence and information regarding the conversion table to the information processing terminal of the addressee allocated to the conversion table, the first presence and the information having been received by the reception section.

A presence distribution system of the present invention includes the information processing terminal of the present invention for sending presence, the server of the present invention, and an information processing terminal including a reception section for receiving the second presence and an output section for outputting the second presence.

A presence distribution system of the present invention includes the information processing terminal of the present invention for sending presence, a server, and the information processing terminal of the present invention for receiving presence. The server includes a reception section for receiving the first presence and information regarding the conversion table. The server also includes a transmission section for transmitting the first presence and information regarding the conversion table to the information processing terminal of the addressee allocated to the conversion table, the first presence and the information having been received by the reception section.

### Effects of the Invention

In communicating certain information to a plurality of members by a notification of presence, the present invention offers a more versatile presence service which provides improved convenience to the user by enabling not the same content to be uniformly communicated but a difference to be set for the communicated content depending on the member.

That is, it is possible to provide a difference for the content of the presence provided, depending on the level of relevancy with the receive member of the presence (e.g., an acquaintance or a close friend) or on the category (a private friend or co-worker at your company). This results in providing improved convenience to the user and facilitating versatile use of the IMPS (Instant Message and Presence Service) as a real-time communications tool.

### Brief Description of the Drawings

Fig. 1 is an explanatory view illustrating the feature of a presence distribution system according to an embodiment of the present invention.
Fig. 2 is an explanatory view illustrating the feature of the presence distribution system according to an embodiment of the present invention.
Fig. 3 is a functional block diagram illustrating an information processing terminal and a server in a presence distribution system according to a first embodiment of the present invention.
Fig. 4 is a view illustrating a communications sequence provided by the presence distribution system according to the first embodiment of the present invention.
Fig. 5 is a functional block diagram illustrating an information processing terminal and a server in a presence distribution system according to a second embodiment of the present invention.
Fig. 6 is a view illustrating a communications sequence provided by a presence distribution system according to the second embodiment of the present invention.
Fig. 7 is a view illustrating an example of a conversion table for a presence distribution system according to a third embodiment of the: present invention.
Fig. 8 is a view illustrating a communications sequence provided by the presence distribution system according to the first embodiment of the present invention.
Fig. 9 is a view illustrating a communications sequence provided by the presence distribution system according to the second embodiment of the present invention.
Fig. 10 is a view illustrating a matrix of conversion tables for the presence distribution system according to the third embodiment of the present invention.

### Description of Symbols

1: Information processing terminal
11: Wireless communications section
12: Location decision section
13: Time acquiring section
14, 51: Storage section
15: Output section
15, 52: Presence decision section
16: Output section
161: Speaker
162: Display section
17: Input section
171: Operation button
172: Microphone

### Best Modes for Carrying Out the Invention

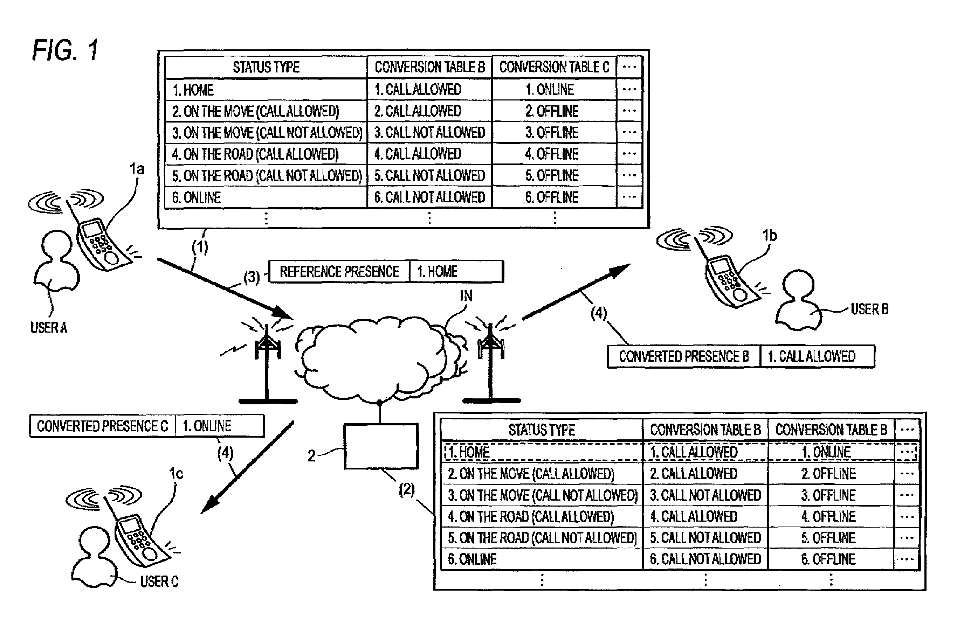

Hereinafter, a presence distribution system according to an embodiment of the present invention will be described in detail. First reference will be made to an explanatory view, shown in Fig. 1, illustrating the feature of a presence distribution system according to an embodiment of the present invention. The outline of a presence distribution process by the presence distribution system according to the embodiment of the present invention will be described.

As shown in Fig. 1, the presence distribution system according to an embodiment of the present invention is configured to connect between information processing terminals 1a, 1b, and 1c serving as a client terminal and a server 2 via a communications network (IN) such as the Internet. For example, the information processing terminals 1a, 1b, and 1c are a mobile telephone which includes the voice-over-IP function (a function for packetizing speech for communications via the internet). The server 2 is a server deployed, e.g., by carriers to realize communications by mobile telephones.

The presence distribution system shown in Fig. 1 shows the feature when the information processing terminal 1a utilized by user A sends via the server 2 the presence to each of the information processing terminal 1b utilized by user B and the information processing terminal 1c utilized by user C. First, user A or the user of the information processing terminal 1a creates a conversion table, corresponding to the status type of the information processing terminal 1a, for each of the user B and user C to whom user A desires to send the presence. For example, as shown in Fig. 1, the candidate types of status, determined by the information processing terminal 1a, for the states of user A include, e.g., "1. Home," "2. On the Move (Call Allowed)," "3. On the Move (Call Not Allowed)," "4. On the Road (Call Allowed)," "5. On the Road (Call Not Allowed)," and "6. Online." The information processing terminal 1a is to send to the server 2 the presence indicating any one status of these status types (hereinafter, the presence serving as the basis of the presence conversion process to be described later is referred to as the "Reference presence").

Furthermore, the conversion table holds, as information, the correspondence for converting the aforementioned status type to other status type. In Fig. 1, the conversion table B is a conversion table to be allocated to the information processing terminal 1b utilized by user B, where the aforementioned status types "1. Home," "2. On the Move (Call Allowed)," "3. On the Move (Call Not Allowed)," "4. On the Road (Call Allowed)," "5. On the Road (Call Not Allowed)," and "6. Online" correspond to other status types "1. Call Allowed," "2. Call Allowed," "3. Call Not Allowed," "4. Call Allowed," "5, Call Not Allowed," and "6. Call Not Allowed," respectively. Likewise, the conversion table C is a conversion table to be allocated to the information processing terminal 1c utilized by user C, where the aforementioned status types "1. Home," "2. On the Move. (Call Allowed)," "3. On the Move (Call Not Allowed)," "4. On the Road (Gall Allowed)," "5. On the Road (Call Not Allowed)," and "6. Online" correspond to other status types "1. Online," "2. Offline," "3. Offline," "4. Offline," "5. Offline," and "6. Offline," respectively. Note that identification information unique to each information processing terminal is attached to the respective conversion tables, so that the identification information allows the information processing terminal 1a and the server 2 to identify that the conversion table B is allocated to the information processing terminal 1b and the conversion table C to the information processing terminal 1c.

The information processing terminal 1a sends the created conversion table B and the conversion table to the server (Step (1) of Fig. 1). Having received the conversion table B and the conversion table C, the server 2 stores these conversion table B and conversion table C in the storage included in the server (Step (2) of Fig. 1).

After that, having determined the status of user A and identified the status type, the information processing terminal 1a sends to the server the Reference presence indicating the status type. In Fig. 1, having determined that user A is at home, the information processing terminal 1a sends the Reference presence indicating the status type "1. Home" to the server (Step (3) of Fig. 1). Having received the Reference presence, the server refers to the pre-stored conversion table B and conversion table C to identify other status type corresponding to the status type indicated by the Reference presence for each of the conversion table B and the conversion table C (the presence conversion process). In Fig. 1, the server 2 refers to the conversion table B to identify other status type "1. Call Allowed," while also referring to the conversion table C to identify other status type "1. Online." Based on the identification information unique to each information processing terminal added to the conversion table B and the conversion table C, the server 2 sends the presence indicating other status identified for each of the conversion table B and the conversion table C (Hereinafter, the presence having been subjected to the presence conversion process is referred to as the "Converted presence.") to the information processing terminal 1b and the information processing terminal 1c. In Fig. 1, the server 2 sends the Converted presence B indicating other status "1. Call Allowed" to the information processing terminal 1b, while sending the Converted presence C indicating other status "1. Online" to the information processing terminal 1c. Having received the Converted presence, the information processing terminal 1b or the information processing terminal 1c outputs the status type indicated by the Converted presence, thus notifying the user B or user C of the status of user A.

Note that in the presence distribution system, some information processing terminal takes the positional information on the information processing terminal as a status, so that the information processing terminal sends the presence containing the positional information. For "7. Positional Information Display Allowed" available as one of the aforementioned status types, the level of detail of the positional information to notify other information processing terminal may be adjusted by corresponding to other status type "7. Wide-area Map Display Allowed" or "7. Detailed Map Display Allowed."

According to the presence distribution system of the embodiment of the present invention, once the user sending the presence has set a conversion table for each user to whom the presence is to be sent, the sending user can then notify the addressed user, for whom the conversion table has been set, of the status optimal for the sending user. As a result, it is possible to provide improved convenience to the user because it is no longer necessary to set the status type, as practiced conventionally, for each of the other addressed users corresponding to the addressed user each time the presence is sent thereto.

Furthermore, in the conventional arrangement in which the status type corresponding to the addressed user is set for and sent to each addressed user, the sending user's information processing terminal has to send the presence separately to each addressed user. Accordingly; the presence has to be sent repeatedly as many times as the number of other addressed users. According to the presence distribution system of the embodiment of the present invention, once the information processing terminal of the sending user has sent the Reference presence, the Converted presence is sent to other addressed users It is thus possible to alleviate the burden on the information processing terminal caused by the presence being sent. Additionally, the amount of communicated data is reduced when the presence is sent from the information processing terminal to the server, thereby alleviating the burden on the network.

On the other hand, in the presence distribution system according to an embodiment of the present invention, the Converted presence having been subjected to the presence conversion process by the server is sent to the addressed information processing terminal. Accordingly, there is no need to add a new function to the addressed information processing terminal, so that the presence distribution system may include therein a conventional information processing terminal.

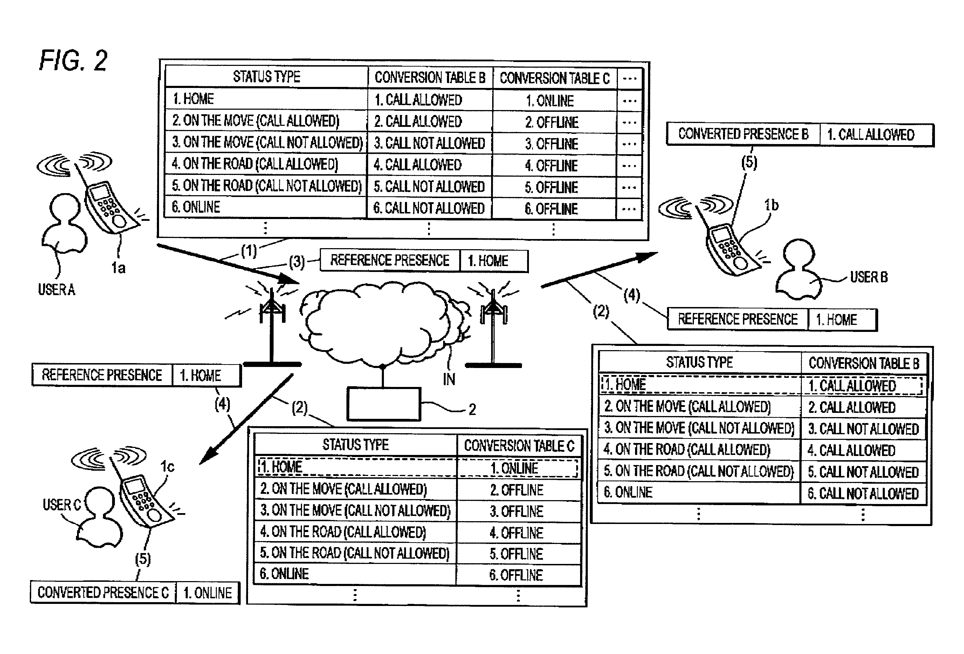

The aforementioned presence distribution system according to an embodiment of the present invention is adapted such that the server 2 performs the presence conversion process. In an alternative embodiment, such a case may also be conceivable in which the information processing terminals of the addressees (the information processing terminals 1b and 1c of Fig. 1) in the presence distribution system perform the presence conversion process. As shown in Fig. 2, referring to the explanatory view illustrating the feature of the presence distribution system according to an embodiment of the present invention, description will be made for the outline of the presence distribution process performed by the presence distribution system according to an embodiment of the present invention.

The presence distribution system shown in Fig. 2 shows the feature when the information processing terminal 1a utilized by user A sends the presence via the server 2 to each of the information processing terminal 1b utilized by user B and the information processing terminal 1c utilized by user C. First, the user of the information processing terminal 1a or user A creates a conversion table for each of the user B and user C, to whom user A desires to send the presence, corresponding to the status type of the information processing terminal 1a. Each conversion table contains identification information unique to the information processing terminal. This identification information allows the information processing terminal 1a and the server 2 to identify that the conversion table B is allocated to the information processing terminal 1b and the conversion table C to the information processing terminal 1c.

The information processing terminal 1a sends the created conversion table B and the conversion table to the server (Step (1) of Fig. 2). Having received the conversion table B and the conversion table C, the server 2 sends the conversion table B to the information processing terminal 1b and the conversion table C to the information processing terminal 1c based on the identification information unique to the information processing terminal and added to the conversion table B and the conversion table C, respectively. Having received the conversion table, the information processing terminal 1b and the information processing terminal 1c store the conversion table in the storage included in the information processing terminal (Step (2) of Fig. 2).

After that, having determined the state of user A and identified the status type, the information processing terminal 1a sends the Reference presence indicating the status type to the server (Step (3) of Fig. 2). Having received the Reference presence, the server sends the received Reference presence to the information processing terminal 1b and the information processing terminal 1c (Step (4) of Fig. 2). Having received the Reference presence, the information processing terminal 1b or the information processing terminal 1c refers to the pre-stored conversion table B or conversion table C to identify other status type corresponding to the status type indicated by the Reference presence (the presence conversion process). In Fig. 2, the information processing terminal 1b refers to the conversion table B to identify other status type "1. Call Allowed," while the information processing terminal 1c also refers to the conversion table C to identify other status type "1. Online." The information processing terminal 1b or the information processing terminal 1c outputs the status type indicated by the Converted presence identified for each of the conversion table B or the conversion table C, thus notifying user B or user C of the status of user A.

As described above; the addressed information processing terminal in the presence distribution system (the information processing terminals 1b and 1c of Fig. 1) may perform the presence conversion process. Even in this case, once the presence sending user has set a conversion table for each presence addressed user, the sending user can then notify the addressed user, for whom the conversion table has been set, of the status optimal for the sending user. As a result, it is possible to provide improved convenience to the user because it is no longer necessary to set the status type, as practiced conventionally, for each of the other addressed users corresponding to the other addressed user each time the presence is sent thereto.

Furthermore, according to the presence distribution system of the embodiment of the present invention, once the sending user's information processing terminal has sent the Reference presence, the information processing terminal of other addressed user converts it to the Converted presence. It is thus possible to alleviate the burden on the information processing terminal caused by the presence being sent. Additionally, the amount of communicated data is reduced when the presence is sent to the server from the information processing terminal, thereby alleviating the burden on the network.

Hereinafter, description will be made in detail for each of a first embodiment in which the server performs the presence conversion process and a second embodiment in which the addressed information processing terminal performs the presence conversion process.

### (First embodiment)

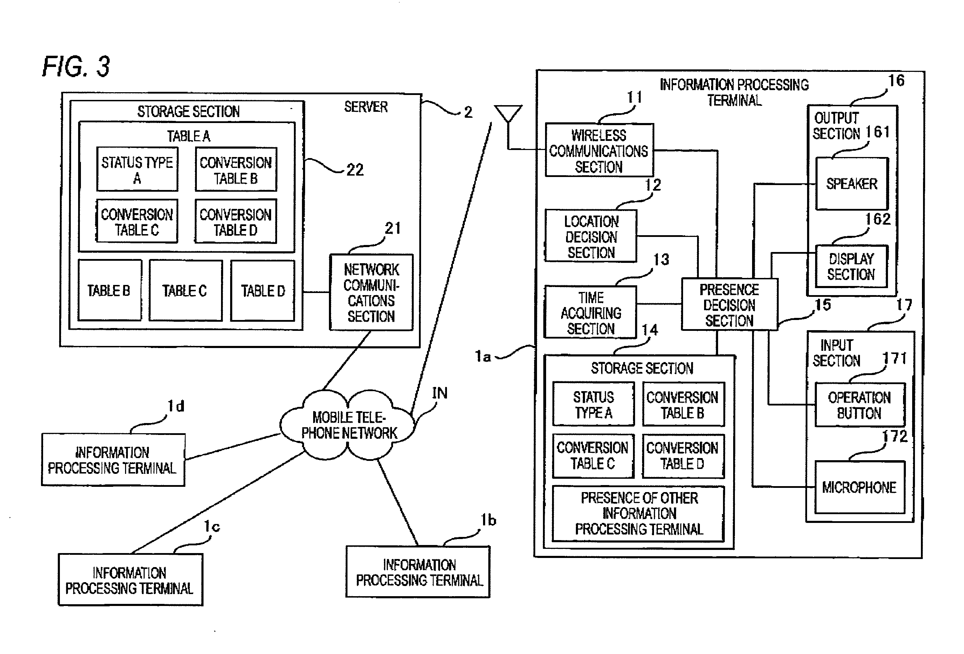

The presence distribution system according to the first embodiment of the present invention will be described in detail. The presence distribution system according to the first embodiment of the present invention allows the sever to perform the aforementioned presence conversion process Fig. 3 shows a functional block diagram for the information processing terminals and the server in the presence distribution system according to the first embodiment of the present invention.

The presence distribution system according to the first embodiment of the present invention includes a plurality of information processing terminals 1a, 1b, 1c, and 1d, and the server 2. In this system, the plurality of the information processing terminals 1a, 1b, 1c, and 1d and the server 2 are connected to each other via a network IN such as a mobile telephone network. The information processing terminal 1a includes a wireless communications section 11, a location decision section 12, a time acquiring section 13, a storage section 14, a presence decision section 15, an output section 16, and an input section 17. The information processing terminals 1b, 1c, and 1d are configured in the same manner as the information processing terminal 1a. The server 2 includes a network communications section 21 and a storage section 22.

In the information processing terminal 1a, the wireless communications section 11 functions to communicate wirelessly with the server 2 in accordance with the predetermined communications scheme and communications protocol that have been established between the portable terminal device 1a and the server 2. Thus, the wireless communications section 11 demodulates an electric signal supplied through the antenna and further decodes it to acquire the digital data, or encrypts the digital data, and then outputs the modulated etectric signal through the antenna. The predetermined communications scheme may include the PDC (Personal Digital Cellular) scheme, the GSM (Global System for Mobile Communication) scheme, and a scheme standardized by the IMT (International Mobile Telecommunications)-2000. Furthermore, the communications protocol for realizing presence distribution is in conformity with the OMA (Open Mobile Alliance) standard specification.

The location decision section 12 functions to calculate the coordinates of the position at which the information processing terminal 1a is located, e.g., measuring the position of the information processing terminal 1a based on the time required for the radiowave to arrive from the base station. Alternatively, the information processing terminal 1a uses the GPS function to measure the position of the information processing terminal 1a.

The time acquiring section 13 acquires a current time from a counter (not shown) which serves as a timer.

The storage section 14 stores the status type A of the information processing terminal 1a, the conversion tables B, C, and D to be allocated to the information processing terminals 1b, 1c, and 1d, and the presence received from the information processing terminals 1b, 1c, and 1d via the server 2 (refer to Fig. 1 for examples of the status type and the conversion table). The information processing terminal 1a allows the wireless communications section 11 to send the status type A stored in the storage section 14 and the conversion tables B, C, and D to the server 2, and registers the data with the server 2.

Based on the positional information output from the location decision section 12, the time information output from the time acquiring section, and the input operation information output from the input section 17, the presence decision section 15 determines the state of user A and identifies the status type A corresponding to the user's state, then outputs it to the storage section 14. Furthermore, the presence decision section 15 creates a conversion table based on the input operation information output from the input section 17, and then outputs the conversion table to the storage section 14. The presence decision section 15 also outputs, to the storage section 14, the presence of the other information processing terminals 1b, 1c, and 1d output from the wireless communications section 11.

The output section 16 is constituted by such as a speaker 161 and a display section 162. The output section 16 displays a window on the display section 162 to prompt the user to create a conversion table or outputs the presence of the other information processing terminals 1b, 1c, and 1d through the speaker 161 or the display section 162.

The input section 17 is constituted by such as an operation button 171 and a microphone 172. When creating a conversion table, the input section 17 accepts an operation for specifying other status corresponding to each status type A and then outputs it to the presence decision section 15.

In the server 2, the network communications section 21 functions to communicate with an information processing terminal 1 serving as a client terminal, performing communications in accordance with the predetermined communications scheme and communications protocol established between the portable terminal device 1 and the server 2.

The storage section 22 stores the status type and the conversion tables received from each of the information processing terminals 1a, 1b, 1c, and 1d. For example, the storage section 22 stores the status type A of the information processing terminal 1a and the conversion tables B, C, and D corresponding to the status type A, to be allocated to the information processing terminals 1b, 1c, and 1d. Here, the status type A and the conversion tables B, C, and D have been received from the information processing terminal 1a (In Fig. 3, the set of the status type A and the conversion tables B, C, and D is denoted as the table A.). Likewise, the server 2 may receive the status type B of the information processing terminal 1b and the conversion tables A, C, and D, corresponding to the.status type B, to be allocated to the information processing terminals 1a, 1c, and 1d. Here, the status type B and the conversion tables A, C, and D have been received from the information processing terminal 1b. In this case, the storage section 22 stores the status type B of the information processing terminal 1b and the conversion tables A, C, and D (In Fig. 3, the set of the status type B and the conversion tables A, C, and D is denoted as the table B. Likewise, the table C is the set of the status type C and the conversion tables A, B, and D. Here, the status type C and the conversion tables A, B, and D have been received from the information processing terminal 1c. The table D is the set of the status type D and the conversion tables A, B, and C. Here, the status type D and the conversion tables A, B, and C have been received from the information processing terminal 1d.).

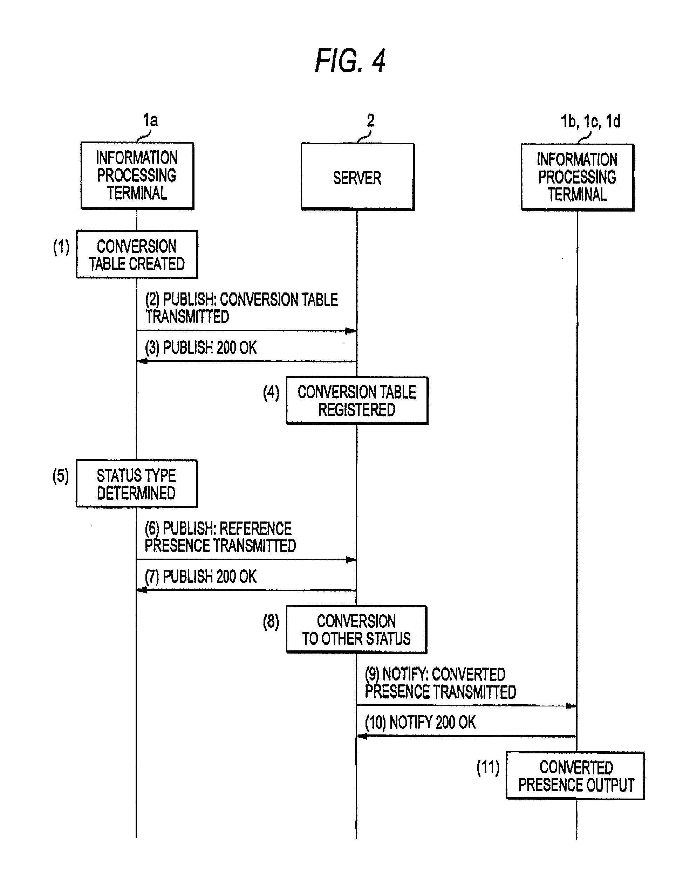

Subsequently, description will be made for the process flow of the presence distribution system according to the first embodiment of the present invention with reference to the communications sequence provided by the presence distribution system according to the first embodiment of the present invention, shown in Fig. 4.

Based on the operation received at the input section 17, the information processing terminal 1a associates each status type A of the information processing terminal 1a with other status. Then, the information processing terminal 1a creates the conversion, tables B, C, and D to be allocated to the other information processing terminals 1b, 1c, and 1d (process (1)), and stores them in the storage section 14. The information processing terminal 1a associates the data regarding the conversion tables B, C, and D stored with the communication identifier for identifying the information processing terminals 1b, 1c, and 1d to which the conversion tables B, C, and D are to be sent, respectively. Then, the information processing terminal 1a attaches the associated data to the body of a PUBLISH message to send the PUBLISH message to the server 2 (process (2)).

Having received the PUBLISH message, the server 2 sends a 200-OK message, for notifying that the PUBLISH message has been received, -to the information processing terminal 1a (process (3)). Additionally, the server 2 extracts the data regarding the conversion tables B, C, and D attached to the PUBLISH message and the communication identifier for identifying the information processing terminals 1b, 1c, and 1d, associating the conversion table with the communication identifier for storage in the storage section 22 (process (4)).

After that, the information processing terminal 1a determines the state of user A to identify the status corresponding to the user's state (process (5)), and then sends, to the server, the PUBLISH message having the status attached to the body (process (6)).

Having received the PUBLISH message, the server 2 sends the 200-OK message, for notifying that the PUBLISH message has been received, to the information processing terminal 1a (process (7)). Additionally, the server 2 extracts the status attached to the PUBLISH message, and identifies other status corresponding to the type of the extracted status for each of the conversion tables B, C, and D stored in the storage section 22 (process (8)). Additionally, the server 2 attaches other status identified to a NOTIFY message and sends the NOTIFY message to the communication identifier corresponding to the conversion table referred to in identifying that other status (process (9)).

Having received the NOTIFY message, the information processing terminals 1b, 1c, and 1d send a 200-OK message, for notifying that the NOTIFY message has been received, to the server 2 (process (10)). Then, the information processing terminals 1b, 1c, and 1d extract other status attached to the NOTIFY message, store it in the storage section 14 as the Converted presence indicating the status of the information processing terminal 1a (the presence of other information processing terminal) to output it as appropriate (process (11)).

As described above, according to the presence distribution system of the first embodiment of the present invention, once the presence sending user has set a conversion table for each presence addressed user, the sending user can then notify the addressed user, for whom a conversion table has been set, of the status optimal for the sending user. As a result, it is possible to provide improved convenience to the user because it is no longer necessary to set the status type, as practiced conventionally, for each of the other addressed users corresponding to the addressed user each time the presence is sent thereto.

Furthermore, in the conventional arrangement in which the status type corresponding to the addressed user is set for and sent to each addressed user the sending user's information processing terminal must send the presence separately to each addressed user. Accordingly, the presence must be sent repeatedly as many times as the number of other addressed users. According to the presence distribution system of the embodiment of the present invention, once the sending user's information processing terminal has sent the Reference presence, the Converted presence is sent to the other addressed users. It is thus possible to alleviate the burden on the information processing terminal caused by the presence being sent. Additionally, the amount of communicated data is reduced when the presence is sent from the information processing terminal to the server, thereby alleviating the burden on the network.

On the other hand, in the presence distribution system according to the embodiment of the present invention, the Converted presence, which has been subjected to the presence conversion process by the server, is sent to the addressed information processing terminal. Accordingly, there is no need to add a new function to the addressed information processing terminal, so that the presence distribution system may include therein a conventional information processing terminal.

Note that in the presence distribution system according to the first embodiment of the present invention, two operational arrangements can be assumed in process (2) when the information processing terminal 1a associates the data regarding the conversion tables B, C, and D. with a communication identifier. Here, the communication identifier identifies the information processing terminals 1b, 1c, and 1d to which the conversion tables B, C, and D are to be sent, respectively. That is, one arrangement is that the user A of the information processing terminal 1a inputs for the association; and the other is that the information processing terminal 1a provides the association automatically based on some data. Description will be made herein for exemplary arrangements in which the conversion table and the communication identifier are automatically associated with each other.

In the first exemplary arrangement, reference is made to the data that is utilized in a contact list incorporated into a recent portable terminal as the data for automatically associating the conversion table with the communication identifier. Some contact lists have the capability of setting an attribute for each of the contacts registered with the contact list. The typical example of attributes includes a group attribute such as "Family," "Friends," and "Work," which are allocated to particular contacts in the list, Since the portable terminal user often groups the contacts in the list according to relevancy, all the contacts in the list to whom a particular group attribute has been set may be conceivably notified of the common presence. Accordingly, the user A of the information processing terminal 1a may set manually a conversion table for each group attribute, and then uniformly allocate the conversion table to all the contacts in the list to whom the group attribute has been set. The user A may then associate it with the communication identifier of the contacts (the communication identifier being registered as one piece of information on the contacts). When compared with a conversion table being manually allocated to each contact, this arrangement can save time and effort for input operation by the user A.

In the second exemplary arrangement, reference is made to the outgoing/incoming history of voice calls or the send/receive history of e-mail as the data for automatically associating the conversion table with the communication identifier. The outgoing/incoming history of voice calls includes the party on the other end of a voice call, and time information such as the time at which the call was initiated and it was ended. The send/receive history of e-mail includes the sender or receiver of e-mail and time information such as the time at which e-mail was sent or received. It can be taken into consideration that the smaller the difference between the time information and the current time, the greater the relevancy between the contact and the portable terminal user is. An appropriate conversion table is allocated, according to the difference, to the party on the other end of voice calls and the sender or receiver of e-mail. Additionally, the conversion table can be associated with the communication identifier of the party on the other end of the voice call and the sender or receiver of e-mail. When compared with the conversion table being manually allocated to each contact, this can save time and efforts for input operation by the user A. Although the example described herein relates to the arrangement for allocating the conversion table depending on the difference between the time information and the current time, the same effects can also be obtained by an arrangement in which the conversion table is allocated depending on the count of voice calls or the number of times of transmissions and receptions.

### (second embodiment)

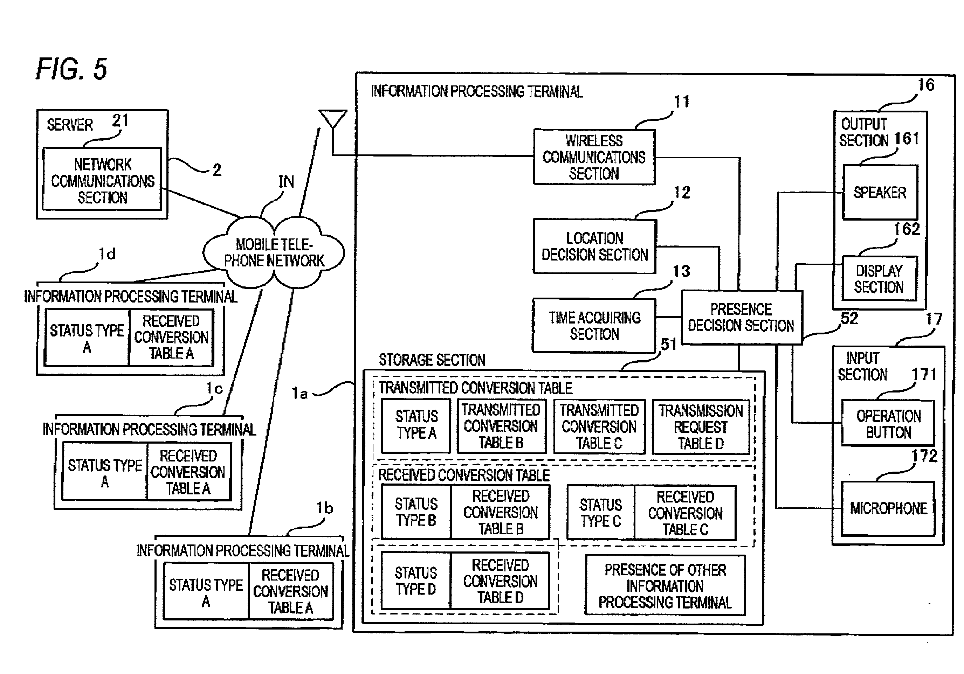

Now, the presence distribution system according to a second embodiment of the present invention will be described in detail, The presence distribution system according to the second embodiment of the present invention allows an addressed information processing terminal to perform the presence conversion process. Fig. 5 shows a functional block diagram for an information processing terminal and a server in the presence distribution system according to the second embodiment of the present invention.

The presence distribution system according to the second embodiment of the present invention includes a plurality of information processing terminals 1a, 1b, 1c, and 1d, and the server 2. In this system, the plurality of information processing terminals 1a, 1b, 1c, and 1d and the server 2 are connected to each other via the network IN such as a mobile telephone network. The information processing terminal 1a includes the wireless communications section 11, the location decision section 12, the time acquiring section 13, the presence decision section 15, the output section 16, the input section 17, and a storage section 51. The information processing terminals 1b, 1c, and 1d are also configured in the same manner as is the information processing terminal 1a. The server 2 includes the network communications section 21. The components given the same reference symbols as those of each portion in the functional block diagram of Fig. 3 are the same as those described in relation to the first embodiment, and thus description thereof will be omitted.

The storage section 51 stores the transmission conversion table, the pre-received conversion table, and the presence of the information processing terminals 1b, 1c, and 1d. The transmission conversion table includes the status type A of the information processing terminal 1a, and the transmitted conversion tables B, C, and D which the information processing terminal 1a sends to the information processing terminals 1b, 1c, and 1d (Refer to the tables shown in process (1) of Fig. 2 for the examples of the status type A and the conversion tables B, C, and D.). The statues type A and the transmission request tables B, C, and D are the data which the information processing terminal 1a sends to the other information processing terminals 1b, 1c, and 1d and which is used by the other information processing terminals 1b, 1c, and 1d to convert the status type A. Furthermore, the pre-received conversion table includes the status, types B, C, and D of the other information processing terminals 1b, 1c, and 1d, and the received conversion tables B, C, and D received by the information processing terminal 1a from the information processing terminals 1b, 1c, and 1d (Refer to process (2) of Fig. 2 for the examples of the status type A and the conversion tables B. C, and D.). The status types B, C, and D and the received conversion tables B, C, and D are the data which is received by the information processing terminal 1a from the other information processing terminals 1b, 1c, and 1d and which is used to convert the status types B, C, and D by the information processing terminal 1a.

A presence decision section 52 determines the state of user A and identifies the status type A corresponding to the user's state to output it to the storage section 51. This is done based on the positional information output from the location decision section 12, the time information output from the time acquiring section, and the input operation information output from the input section 17. Furthermore, the presence decision section 15 creates a transmitted conversion table in the transmission conversion table based on the input operation information output from the input section 17 and then outputs the transmitted conversion table to the storage section 51. Furthermore, the presence decision section 15 outputs, to the storage section 14, the status types B, C, and D of the other information processing terminals 1b, 1c, and 1d and the received conversion tables B, C, and D, which have been output from the wireless communications section 11.

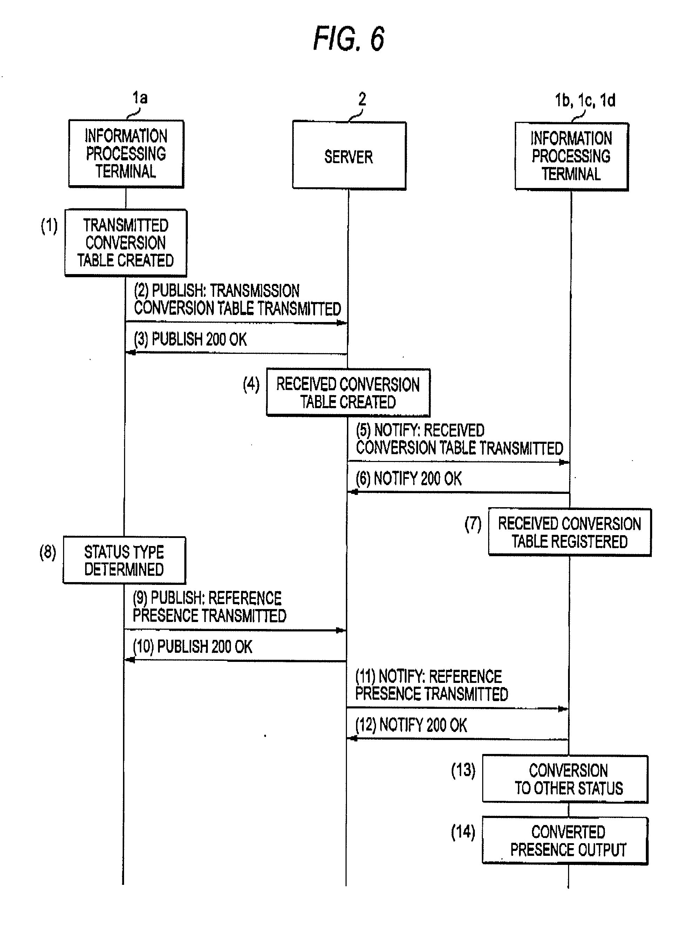

Subsequently, description will be made for the process flow of the presence distribution system according to the second embodiment of the present invention with reference to the communications sequence provided by the presence distribution system according to the second embodiment of the present invention, shown in Fig. 6.

Based on an operation received at the input section 17, the information processing terminal 1a associates each status type A of the information processing terminal 1a with other status. Then, the information processing terminal 1a creates the transmitted conversion tables B, C, and D to be sent to the other information processing terminals 1b, 1c, and 1d (process (1)) for storage in the storage section 14. The information processing terminal 1a associates the data regarding the transmitted conversion tables B, C, and D stored with the communication identifier for identifying the information processing terminals 1b, 1c, and 1d to which the transmitted conversion tables B, C, and D are to be sent, respectively. Then, the information processing terminal 1a attaches the associated data to the body of a PUBLISH message to send the PUBLISH message to the server 2 (process (2)).

Having received the PUBLISH message, the server 2 sends a 200-OK message, for notifying that the PUBLISH message has been received, to the information processing terminal 1a (process (3)). Additionally, the server 2 extracts the data regarding the transmitted conversion tables B, C, and D attached to the PUBLISH message and the communication identifier for identifying the information processing terminals 1b, 1c, and 1d, creating each of the transmitted conversion tables B, C, and D as the received conversion table A (process (4)). The server 2 attaches the received conversion table A having been created to the NOTIFY message and then sends the NOTIFY message addressed to the communication identifier corresponding to the transmitted conversion tables B, C, and D (process (5)).

Having received the NOTIFY message, the information processing terminals 1b, 1c, and 1d send the 200-OK message, for notifying that the NOTIFY message has been received, to the server 2 (process (6)). Furthermore, the information processing terminals 1b, 1c, and 1d store the received conversion table A attached to the NOTIFY message in the storage section 22 (process (7)).

Note that in Fig. 5, the "X" of the transmitted conversion table X (X=B, C, or D) is set to correspond to the "X" of the addressed information processing terminal 1x (x=b, c, or d). This is because the transmitted conversion tables B, C, and D are those tables that the information processing terminal 1a sent to the information processing terminals 1b, 1c, and 1d, respectively, On the other hand, since the received conversion table A is a table received by each of the information processing terminals 1b, 1c, and 1d from the information processing terminal 1a, the "A" of the received conversion table A is set corresponding to the "a" of the sending information processing terminal 1a. Suppose any one of the information processing terminals 1b, 1c, and 1d has sent the status types B, C, and D of the information processing terminals 1b, 1c, and 1d and the transmitted conversion table A to the information processing terminal 1a. In this case, the information processing terminal 1a is to receive the received conversion tables B, C, and D and store them.

After that, the information processing terminal 1a determines the state of the user A and identifies the status corresponding to the user's state (process (8)). Then, the information processing terminal 1a sends, to the server, the PUBLISH message having the status attached to the body (process (9)).

Having received the PUBLISH message, the server 2 sends a 200-OK message, for notifying that the PUBLISH message has been received, to the information processing terminal 1a (process (10)). Furthermore, the server 2 extracts the status attached to the PUBLISH message, attaches the extracted status to the NOTIFY message, and sends the NOTIFY message to the information processing terminals 1b, 1c, and 1d (process (11)).

Having received the NOTIFY message, the information processing terminals 1b, 1c, and 1d send a 200-OK message, for notifying that the NOTIFY message has been received, to the server 2 (process (11)). Then, the information processing terminals 1b, 1c, and 1d extract the status attached to the NOTIFY message, and referring to the received conversion table A pre-stored in the storage section 22 of its own terminal, identify other status corresponding to the type of the extracted status (process (13)). Then, the information processing terminals 1b, 1c, and 1d store the status as the Converted presence indicating the status of the information processing terminal 1a (the presence of other information processing terminal) in the storage section 14 to output it as appropriate (process (14)).

As described above, according to the presence distribution system of the second embodiment of the present invention, once the presence sending user has set a conversion table for each presence addressed user, the sending user can then notify the addressed user, for whom the conversion table has been set, of the status optimal for the sending user. As a result, it is possible to provide improved convenience to the user because it is no longer necessary to set the status type, as practiced conventionally, for each of the other addressed users corresponding to the other addressed user each time the presence is sent thereto.

Furthermore, according to the presence distribution system of the second embodiment of the present invention, once the sending user's information processing terminal has sent the Reference presence, the information processing terminal of other addressed user converts it to the Converted presence. It is thus possible to alleviate the burden on the information processing terminal caused by the presence being sent. Additionally, the amount of communicated data is reduced when the presence is sent from the information processing terminal to the server, thereby alleviating the burden on.the network.

Note that in the presence distribution system according to the second embodiment of the present invention, two operational arrangements can be assumed in process (2) when the information processing terminal 1a associates the data regarding the conversion tables B, C, and D with a communication identifier. Here, the communication identifier identifies the information processing terminals 1b, 1c, and 1d to which the conversion tables B, C, and D are to be sent, respectively. That is, one arrangement is that the user A of the information processing terminal 1a inputs for the association; and the other is that the information processing terminal 1a provides the association automatically based on some data. Description will be made herein for exemplary arrangements in which the conversion table and the communication identifier are automatically associated with each other.

In the first exemplary arrangement, reference is made to the data that is utilized in a contact list incorporated into a recent portable terminal as the data for automatically associating the conversion table with the communication identifier. Some contact lists have the capability of setting an attribute for each of the contacts registered with the contact list. The typical example of attributes includes a group attribute such as "Family," "Friends," and "Work," which are allocated to particular contacts in the list. Since the portable terminal user often groups the contacts in the list according to relevancy, all the contacts in the list to whom a particular group attribute has been set may be conceivably notified of the common presence. Accordingly, the user A of the information processing terminal 1a may set manually a conversion table for each group attribute, and then uniformly allocate the conversion table to all the contacts in the list to whom the group attribute has been set. The user A may then associate it with the communication identifier of the contacts (the communication identifier being registered as one piece of information on the contacts). When compared with the conversion table being manually allocated to each contact, this arrangement can save time and effort for input operation by-the user A.

In the second exemplary arrangement, reference is made to the outgoing/incoming history of voice calls or the send/receive history of e-mail as the data for automatically associating the conversion table with the communication identifier. The outgoing/incoming history of voice calls includes the party on the other end of a voice call, and time information such as the time at which the call was initiated and it was ended. The send/receive history of e-mail includes the sender or receiver of e-mail and time information such as the time at which e-mail was sent or received. It can be taken into consideration that the smaller the difference between the time information and the current time, the greater the relevancy between the contact and the portable terminal user is. An appropriate conversion table is allocated, according to the difference, to the party on the other end of voice calls and the sender or receiver of e-mail. Additionally, the conversion table can be associated with the communication identifier of the party on the other end of the voice call and the sender or receiver of e-mail. When compared with the conversion table being manually allocated to each contact, this can save time and effort for input operation by the user A, Although the example described herein relates to the arrangement for allocating the conversion table depending on the difference between the time information and the current time, the same effects can also be obtained by an arrangement in which the conversion table is allocated depending on the count of voice calls or the number of times of transmissions and receptions.

### (Third embodiment)

The presence distribution systems of the first embodiment and the second embodiment of the present invention are adapted such that the user of the information processing terminal owned by the sender of the Reference presence sets the Converted presence after conversion. Description will be made for a third embodiment of the present invention or an embodiment in which information such as the time for distributing the presence or the status of the addressed information processing terminal is reflected in the conversion table. Note that the configuration of the presence distribution system according to the third embodiment of the present invention is the same, except for the information regarding the conversion table, as those of the first embodiment and the second embodiment of the present invention described above and thus description thereof will be omitted, In the presence distribution system of the first embodiment of the present invention, the aforementioned information is stored in the storage section 14 of the information processing terminal 1a and the storage section 22 of the server 2. On the other hand, in the presence distribution system of the second embodiment of the present invention, that information is stored in the storage section 51 of the information processing terminal 1a. Fig, 7 shows an example of a conversion table in the presence distribution system according to the third embodiment of the present invention.

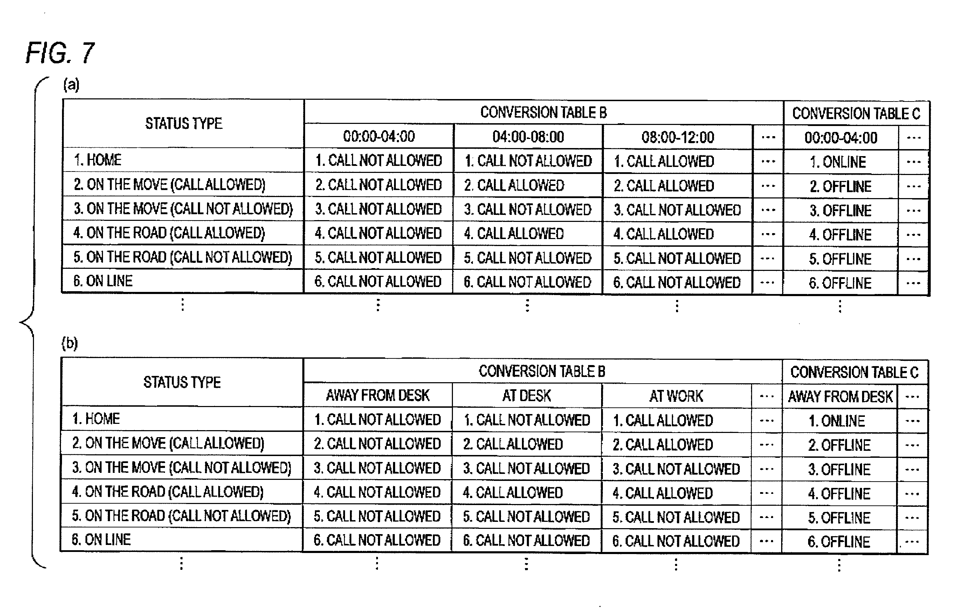

As shown in Fig. 7(a), the conversion table B or the transmitted conversion table created by the information processing terminal 1a has other status allocated for each status type A of the information processing terminal 1a during each period of time "00:00-04:00," "04:00-08:00." "08:00-12:00," etc. Note that a series of other statuses in each period of time may be referred to as the conversion element table.

Suppose that the conversion table shown in Fig. 7(a) is used. In this case, having received the PUBLISH message, the server 2 of the first embodiment extracts the status attached to the PUBLISH message. Then, for each of the conversion tables B, C, and D stored in the storage section 22, the server 2 identifies other status corresponding to the type of the extracted status from the conversion element table. Here, the table contains the time, at which the PUBLISH message has been received, in the periods of time (any one of "00:00-04:00." "04:00-08:00," and "08:00-12:00") (process (8)).

Furthermore, when the conversion table shown in Fig. 7(a) is used, the information processing terminals 1b, 1c, and 1d of the second embodiment extract the status attached to the NOTIFY message. Then, referring to the received conversion table A pre-stored in the storage section 22 of its own terminal, the information processing terminals 1b, 1c, and 1d identify other status type corresponding to the extracted status type from the conversion element table which contains the time, at which the NOTLFY message has been received, in the time periods (process (13)).

This configuration allows other information processing terminal to be notified of the presence in greater detail.

Furthermore, the presence distribution system according to the third embodiment of the present invention also adopts other exemplary conversion tables described below. That is, as shown in Fig. 7(b), the conversion table B or the transmitted conversion table created by the information processing terminal 1a has other status. This status is assigned for each of the status type A of the information processing terminal 1a, depending on each of the status "Away from desk," "At desk," "At work," etc. notified by other information processing terminal. Note that a series of other statuses in a certain status notified by other information processing terminal may be referred to as the conversion element table.

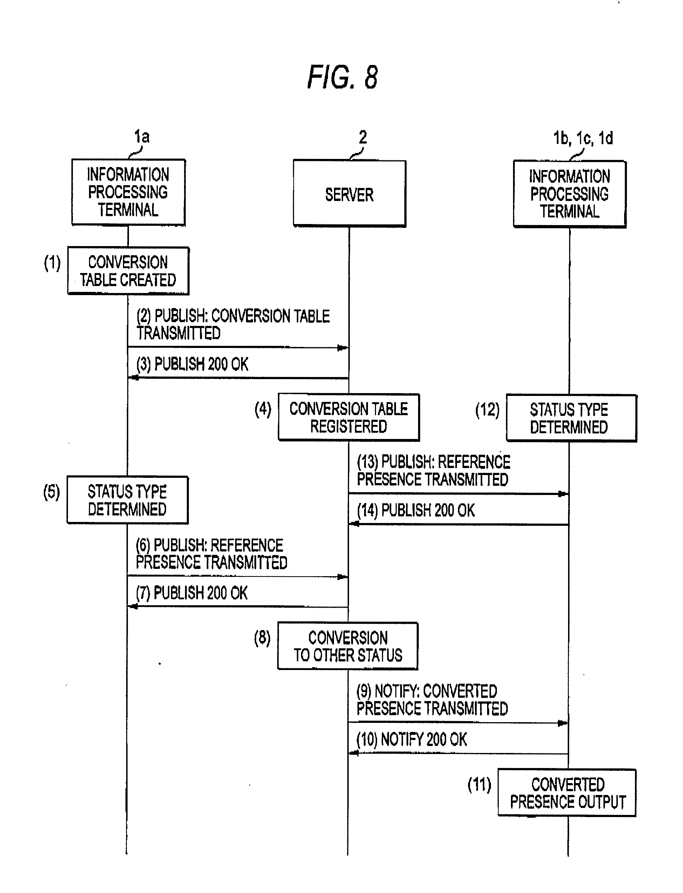

As with the communications sequence provided by the presence distribution system according to the first embodiment of the present invention shown in Fig. 8; the server 2 identifies the status corresponding to the state of the user of the information processing terminal 1a (process (12)). This is done so as to receive the Reference presence from the information processing terminal 1a which has performed the processes (5) and (6) shown in the sequence of Fig. 4. Then, the server 2 sends the PUBLISH message having the status attached to the body to the server (process (13)). The server 2 can also receive the Reference presence from the information processing terminals 1b, 1c, and 1d in the same manner. Having received the PUBLISH message from the information processing terminal 1a, the server 2 extracts the status attached to the PUBLISH message. Then, the server 2 identifies, for each of the conversion tables B, C, and D pre-stored in the storage section 22, other status corresponding to the type of the extracted status from the conversion element table (process (8)). This is done corresponding to the status (one of "Away from desk," "At desk," "At work," etc.) attached to the PUBLISH message received from each of the information processing terminals 1b, 1c, and 1d in process (13).

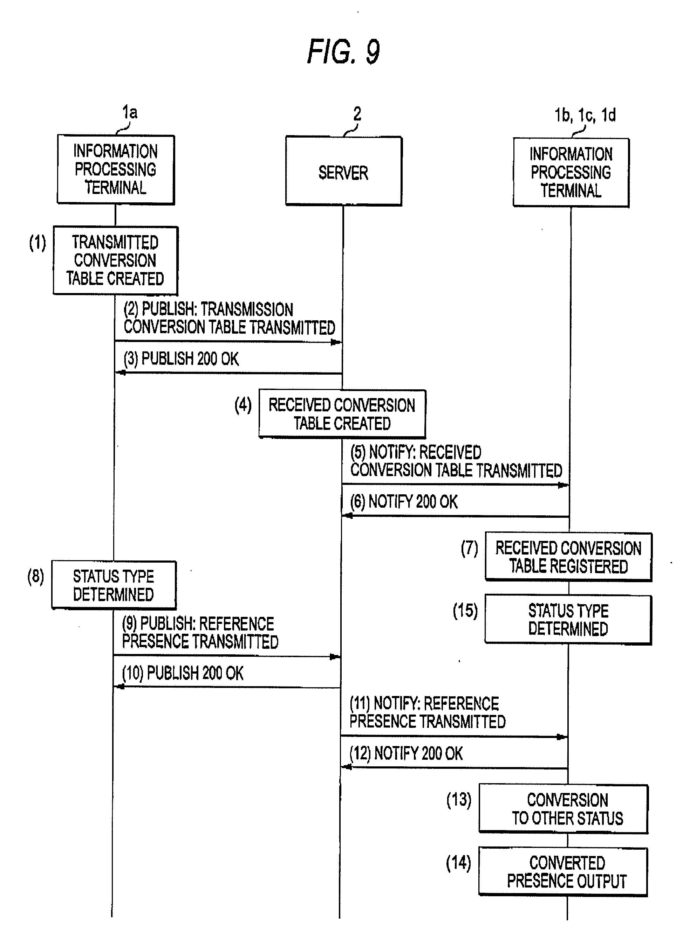

Furthermore, as in the communications sequence provided by the presence distribution system according to the second embodiment of the present invention shown in Fig. 9, the information processing terminal 1a performs the process (8) shown in the sequence of Fig. 6 to identify the status corresponding to the state of the user A. Likewise, the information processing terminals 1b, 1c, and 1d identify the status corresponding to the state of users B, C, and D (process (15)), Having received The NOTIFY message from the server 2, the information processing terminals 1b, 1c, and 1d extract the status attached to the NOTIFY message. Then, referring to the received conversion table A pre-stored in the storage section 22 of its own terminal, the information processing terminals 1b, 1c, and 1d identify other status corresponding to the type of the extracted status from the conversion element table (process (13)). This is done corresponding to the status (one of "Away from desk," "At desk," "At work," etc.) identified by the information processing terminals 1b, 1c, and 1d in process (15).

This configuration allows other information processing terminal to be notified of the presence in greater detail.

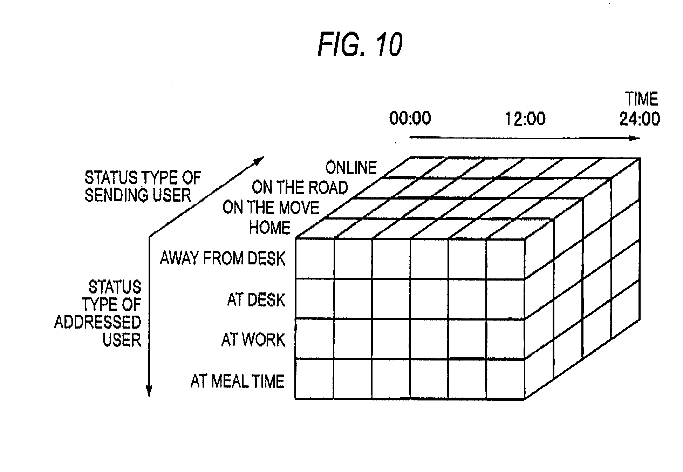

Alternatively, other status may be allocated for each status type of the information processing terminals serving as the sender. This can be done depending on the combination of the time period "00:00-04:00," "04:00-08:00," and "08:00-12:00," etc., and the status "Away from desk," "At desk," "At work," etc. of the information processing terminal to which the presence is to be sent. That is, it is acceptable to adopt a three-dimensional matrix of conversion tables like a matrix of conversion tables for the presence distribution system according to the third embodiment of the present invention shown in Fig. 10. This three-dimensional matrix of conversion tables has, as its axes, the status type of the sending user, the time period, and the status type of the addressed user, with each cell of the matrix assigned other status. Note that the matrix itself of Fig. 10 may store, instead of storing the message in the matrix itself, a number indicating the status type or the pointer or the address representative of the location of storage of the information regarding the status type.

Note that the status type of the aforementioned addressed information processing terminal may be the positional information on the location of the addressed information processing terminal. In this case, depending on the positional information of the addressed information processing terminal, the status "Away from dusk," "At desk," "At work," etc., of the addressed information processing terminal will be identified.

As described above, according to the presence distribution system of the third embodiment of the present invention, the information processing terminal serving as the sender of presence can notify other information processing terminal serving as a presence receiver of the presence in greater detail. This allows for providing improved convenience to the presence distribution service which is offered to the user of the system.

While the present invention has been described in detail with reference to particular embodiments, it is obvious to those skilled in the art that various modifications and changes can be made thereto without deviating from the spirit and scope of the present invention.

### Industrial Applicability

In communicating some information to a plurality of members by notifying them of presence, the present invention allows the same content not to be uniformly communicated but a difference to be set for the communicated content depending on the member. This results in the user's convenience being improved, making the invention useful in the field of presence distribution systems.which can provide the IMPS.

## Claims

1. An information processing terminal for sending presence, comprising:
a conversion table allocation section which allocates, to a conversion table for converting a first presence indicating a status of the information processing terminal to a second presence, an information processing terminal of an addressee to whom the conversion table is to be sent; and
a transmission section which transmits the first presence and information regarding the conversion table to which information regarding the information processing terminal of the addressee is allocated by the conversion table allocation section.

2. An information processing terminal for receiving presence, comprising:
a reception section which receives a first presence indicating a status of an information processing terminal of a sender and information regarding a conversion table for converting the first presence to a second presence;
a presence conversion section which converts the first presence to the second presence based on the information regarding the conversion table; and
an output section which outputs the second presence.

3. An information processing terminal for sending and receiving presence, comprising:
a conversion table allocation section which allocates, to a conversion table for converting a first presence indicating a status of the information processing terminal to a second presence, an information processing terminal of an addressee to whom the conversion table is to be sent;
a transmission section which transmits the first presence and information regarding the conversion table to which information regarding the information processing terminal of the addressee is allocated by the conversion table allocation section;
a reception section which receives the first presence and information regarding the conversion table;
a presence conversion section which converts the first presence to the second presence based on the information regarding the conversion table; and
an output section which outputs the second presence.

4. The information processing terminal according to claim 1 or 3, wherein the conversion table includes a conversion element table for converting the first presence to the second presence, the conversion element table being set for each presence type.

5. The information processing terminal according to claim 1 or 3, wherein the conversion table includes a conversion element table for converting the first presence to the second presence, the conversion element table being set corresponding to time.

6. The information processing terminal according to claim 2 or 3, wherein the conversion table includes a conversion element table for converting the first presence to the second presence, the conversion element table being set for each presence type; and
wherein the presence conversion section converts the first presence to the second presence based on the conversion element table corresponding to a third presence type indicating a status of the information processing terminal,

7. A server for sending and receiving presence to/from an information processing terminal, comprising;
a reception section which receives a first presence indicating a status of a first information processing terminal and information regarding the conversion table to which information regarding a second information processing terminal is allocated;
a presence conversion section which converts the first presence to the second presence based on the conversion table; and
a transmission section which transmits the second presence converted by the presence conversion section to the second information processing terminal.

8. The server according to claim 7, wherein the conversion table includes a conversion element table for converting the first presence to the second presence, the conversion element table being set for each presence type;
wherein the reception section receives a third presence indicating a status of the second information processing terminal; and
wherein the presence conversion section converts the first presence to the second presence based on the conversion element table corresponding to a type of the third presence received by the reception section.

9. A presence distribution system comprising:
the information processing terminal according to claim 1 or 3; and
a server, including:
a reception section which receives the first presence and information regarding the conversion table; and
a transmission section which transmits the first presence and the information regarding the conversion table to the information, processing terminal of the addressee allocated to the conversion table, the first presence and the information being received by the reception section.

10. A presence distribution system, comprising:
the information processing terminal according to claim 1; and
the server according to claim 7.

11. A presence distribution system comprising:
the server according to claim 7; and
an information- processing terminal having a reception section which receives the second presence and an output section which outputs the second presence.

12. A presence distribution system comprising:
a server, including:
a reception section which receives the first presence and information regarding the conversion table, and a transmission section which transmits the first presence and information regarding the conversion table to the information processing terminal of the addressee allocated to the conversion table, the first presence and the information being received by the reception section; and
the information processing terminal according to claim 2 or 3.

13. A presence distribution system comprising:
the information processing terminal according to claim 1;
the server according to claim 7; and
an information processing terminal including a reception section which receives the second presence and an output section which outputs the second presence.

14. A presence distribution system comprising:
the information processing terminal according to claim 1;
a server including a reception section which receives the first presence and the information regarding the conversion table, and a transmission section which transmits the first presence and the information regarding the conversion table to the information processing terminal of the addressee allocated to the conversion table, the first presence and the information being received by the reception section; and
the information processing terminal according to claim 2.
